# FASCICULE DE BREVET EUROPEEN

(11) **EP 2 873 022 B1**
(45) Date de publication et mention de la délivrance du brevet: **19.09.2018**
(21) Numéro de dépôt: 13734790.2
(22) Date de dépôt: 09.07.2013
(51) Int. Cl.: G06F 21/55, G06F 21/75

(54) **PROCÉDÉ DE TRAITEMENT COMPARATIF SÉCURISÉ**
VERFAHREN FÜR SICHERE VERGLEICHENDE VERARBEITUNG
METHOD OF SECURE COMPARATIVE PROCESSING

(30) Priorité: 10.07.2012 FR 1256621
(43) Date de publication de la demande: 20.05.2015
(73) Titulaire: Morpho, 92130 Issy-les-Moulineaux (FR)
(72) Inventeur: BERTHIER, Maël, F-92130 Issy Les Moulineaux (FR)
(74) Mandataire: Regimbeau
(86) Numéro de dépôt international: PCT/EP2013/064489
(87) Numéro de publication internationale: WO 2014/009371

(56) Documents cités:
- FR-A1- 2 813 468

## Description

### DOMAINE DE L'INVENTION

La présente invention concerne les procédés de traitement comparatifs sécurisés.

Elle trouve en particulier avantageusement application pour la sécurisation des traitements de comparaison qui peuvent être mis en oeuvre sur une carte à puce : authentification de code PIN par exemple, ou encore vérifications de certificats.

### ETAT DE LA TECHNIQUE

De nombreux composants électroniques mettent en oeuvre des opérations de comparaison entre des données secrètes et des données à soumettre à la comparaison, appelées dans la suite « données d'épreuve ». Ces opérations de comparaison peuvent faire l'objet d'attaques pour déterminer lesdites données secrètes.

Certaines de ces attaques, dites « side channels », consistent à étudier le comportement du composant (par exemple une carte à puce), notamment en termes de fuites électromagnétiques, ou encore en termes de variations de consommation électrique, ou de temps de réponse.

En effet si, au cours d'une comparaison entre une valeur secrète et une valeur d'épreuve, la valeur d'épreuve correspond à la valeur secrète, le composant va exécuter des opérations différentes des autres cas (déclenchement d'un programme déterminé, etc.).

Ainsi, en analysant certains paramètres de fonctionnement du composant lors de comparaisons successives, il est possible de mettre en évidence des différences de comportement lorsque les données d'épreuve soumises correspondent aux données secrètes et ainsi de récupérer les données secrètes.

Pour parer ce type d'attaque, diverses solutions ont été développées. Le document FR2813468 divulgue un procédé permettant de protéger contre les fuites d'informations lors de la comparaison des codes d'accès. Aux fins de la comparaison, le code présenté par l'utilisateur est divisé en blocs et comparé bloc par bloc au code secret. En cas de différence, le code présenté n'est pas immédiatement refusé, mais continue à être traité en réalisant des manipulations factices du code secret. Ceci élimine les différences de consommation électrique et de durée de comparaison puisque le nombre de comparaisons ainsi que le temps de calcul seront identiques que le code présenté soit correct ou non.

Ces solutions comprennent, par exemple, l'implémentation de programmes dits « symétriques », c'est-à-dire similaires en cas de correspondance ou non entre les données comparées, afin par exemple que les profils de consommation électrique du système soient identiques.

Une telle solution présente néanmoins l'inconvénient d'être très difficile à mettre en oeuvre. En effet, le succès de la comparaison implique nécessairement une différence de traitement par rapport à un échec de cette comparaison.

Une autre solution a été de générer, dans les programmes exécutés pendant la comparaison ou après celle-ci, en cas d'échec comme en cas de succès, des délais d'exécution aléatoires. Outre la gêne nécessairement occasionnée par ces délais, cette solution présente en outre l'inconvénient d'être facilement détectable par un attaquant. A mesure des comparaisons infructueuses réalisées, celui-ci peut constater l'absence de signature particulière des faux identifiants (c'est-à-dire des données secrètes distinctes des données secrètes de contrôle).

### PRESENTATION DE L'INVENTION

Par conséquent, l'invention a pour but de proposer un procédé d'authentification sécurisé plus résistant aux attaques « side channels » que les procédés sécurisés de l'art antérieur, et ne présentant pas les inconvénients ci-dessus mentionnés.

A cet égard, l'invention propose un procédé de traitement comparatif sécurisé du type dans lequel un processeur d'un composant électronique compare des données d'épreuve qu'il reçoit en entrée à des données secrètes principales stockées dans ledit composant électronique, caractérisé en ce que le processeur met en oeuvre, en parallèle de la comparaison aux données secrètes, des opérations complémentaires sur les données d'épreuve qui génèrent sur le composant électronique une variation de comportement qui est fonction des données d'épreuve qu'il reçoit en entrée et qui s'ajoute à la variation de comportement liée à la comparaison aux données secrètes principales.

On notera que de cette façon, les fuites électromagnétiques, variations de courant, etc... qui peuvent être repérées par un observateur externe sont liées :
- aux opérations communes qui seront semblables pour toutes valeurs soumises ;
- aux bruits qui seront différents quelques soient la comparaison même en utilisant la même valeur ;
- aux données secrètes (si la valeur soumise correspond au secret) ;
- aux données d'épreuve (variation de comportement lié à celles-ci).

Ainsi, après dé-bruitage, la fuite ou la variation de consommation totale, est la somme d'une composante commune, d'une composante liée à la comparaison aux données secrètes et d'une composante liée aux opérations complémentaires, laquelle est fonction des données d'épreuve.

Il est alors impossible pour un observateur externe de distinguer dans la variation de comportement du composant celle qui correspond à la comparaison aux données secrètes et celle qui correspond aux opérations complémentaires, laquelle est fonction des données d'épreuve.

L'invention concerne également un composant électronique d'authentification comprenant une mémoire dans laquelle sont stockées des données secrètes de contrôle principales et des données de contrôle additionnelles, et un processeur, le composant électronique étant caractérisé en ce que le processeur est adapté pour mettre en oeuvre le procédé proposé.

### DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :
- La figure 1 représente schématiquement un exemple de composant électronique d'authentification sécurisé et des échanges d'information avec un terminal d'authentification.
- La figure 2 représente les principales étapes d'un exemple de mise en oeuvre du procédé.

### DESCRIPTION DETAILLEE D'EXEMPLES DE REALISATION

On se place dans la suite du texte, dans le cadre purement illustratif d'un procédé d'authentification de codes PIN, d'autres applications de traitements comparatifs sécurisés étant bien entendu envisageables.

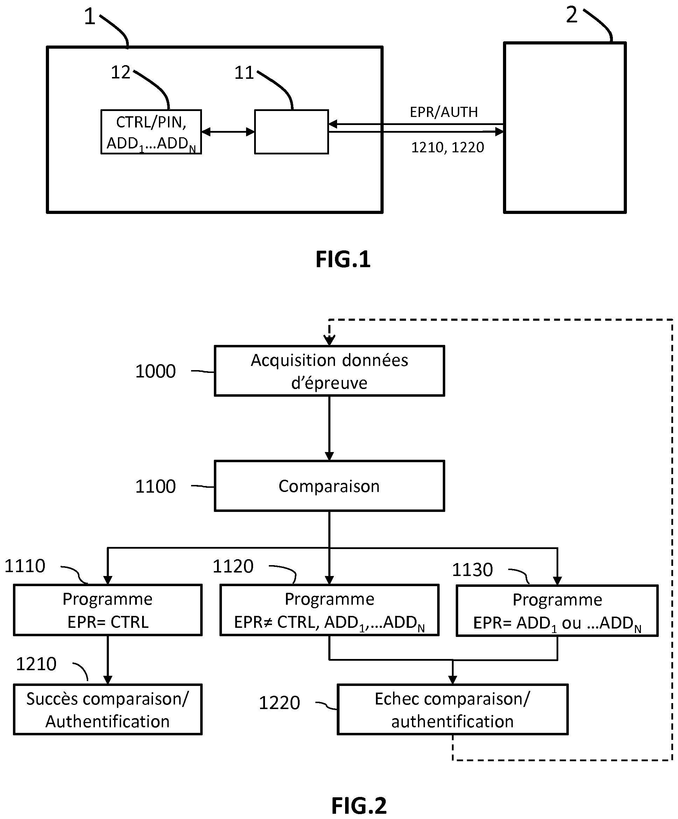

En référence à la figure 1, on a représenté un composant électronique d'authentification 1, permettant de mener à bien une authentification par comparaison entre des données secrètes de contrôle CTRL et des données d'épreuve EPR à comparer aux données de contrôle, ces données étant par exemple des données d'authentification AUTH. Ces données sont par exemple des codes chiffrés.

Ce composant 1 comprend une électronique permettant la mise en oeuvre de cette comparaison, par exemple un processeur 11, adapté pour communiquer avec une mémoire 12, dans laquelle sont stockées les données secrètes de contrôle PIN. Le composant 1 est par exemple du type carte à puce.

Le composant 1 est en outre apte à dialoguer avec un terminal 2, ce terminal étant une interface d'acquisition des données d'épreuve EPR à comparer aux données secrètes de contrôle CTRL.

De manière connue en soi, le terminal 2 procède à l'acquisition de données d'épreuve telles que des données d'authentification AUTH à comparer aux données secrètes de contrôle CTRL. A titre d'exemple non limitatif, un individu peut composer un code correspondant aux données d'authentification AUTH, pour comparaison avec un code PIN.

Le terminal 2 communique ensuite au processeur 11 les données d'épreuve EPR, et le processeur compare lesdites données avec les données secrètes de contrôle CTRL. Dans le cas d'un procédé d'authentification, la correspondance entre les données secrètes et les données d'épreuve assure l'authentification de l'individu et entraîne l'exécution par le processeur d'un programme 11 prédéterminé. Cette correspondance autorise l'accès de l'individu à un service dédié, pouvant être dans le cas d'une carte à puce, à titre d'exemple non limitatif, un service de paiement, ou l'accès à un service de téléphonie, etc.

La mémoire 12 du système d'authentification 1 stocke en outre des données secrètes additionnelles ADD₁, ..., ADD_{N}, distinctes des données secrètes de contrôle CTRL.

Contrairement aux données secrètes de contrôle CTRL, ces données ne permettent pas d'effectuer une authentification, ou d'autoriser l'accès à un service particulier. Leur rôle est explicité en référence à la figure 2 décrite ci-après.

### Procédé d'authentification

Sur la figure 2, on a représenté les principales du procédé selon l'invention. La première étape 1000, évoquée ci-avant, est l'acquisition par le processeur 11 de données d'épreuve EPR, via l'acquisition et la transmission par le terminal 2.

Le processeur compare ensuite les données d'épreuve EPR aux données secrètes de contrôle CTRL, ainsi qu'à l'ensemble des données secrètes additionnelles ADD₁, ..., ADD_{N}.

Il met ainsi en oeuvre une opération de comparaison 1110 sur les données secrètes de contrôle CTRL.

Or le processeur 11 est adapté pour mettre en oeuvre, pendant ou après l'étape de comparaison, des opérations qui génèrent une variation de son comportement qui est fonction des données d'épreuve EPR qu'il reçoit en entrée.

Ainsi, un observateur extérieur ne peut distinguer le comportement du composant 1 selon qu'il y a ou non succès de la comparaison 1110.

Une réalisation possible mais non limitative est décrite ci-dessous en référence à la figure 2.

En cas de correspondance entre les données secrète de contrôle CTRL et les données d'épreuve EPR - ce qui exclut la possibilité de correspondance entre les données d'épreuve EPR et l'une des données secrètes additionnelles ADD₁, ..., ADD_{N} - le processeur exécute un programme déterminé correspondant au succès de la comparaison 1210, par exemple à une authentification.

En parallèle ou à la suite de cette comparaison 1110 ou de cette authentification 1210, le processeur met également en oeuvre des opérations complémentaires liées aux données secrètes additionnelles ADD₁, ..., ADD_{N}, notamment par exemple des comparaisons entre les données d'épreuve EPR et l'une des données secrètes additionnelles ADD₁, ..., ADD_{N}.

En cas de correspondance entre les données d'épreuve EPR et l'une des données secrètes additionnelles ADD₁, ..., ADD_{N}, le processeur exécute des programmes particuliers propres à ces valeurs secrètes additionnelles. De cette façon, le comportement externe du composant se trouve modifié, alors même qu'il ne s'agit pas d'une authentification ou d'un succès de la comparaison entre les données d'épreuve et les données de contrôle.

De la sorte, un attaquant qui observerait la consommation électrique du composant 1 pendant l'étape de comparaison pourrait considérer que le profil de consommation de courant particulier du composant 1 provient d'un programme exécuté en cas d'authentification. Il en déduirait donc que les données d'épreuve EPR entrées correspondent aux données secrètes de contrôle CTRL, et serait induit en erreur.

Le composant électronique peut être du type dans lequel un compteur est associé à l'étape de comparaison, le compteur étant initialisé à une valeur N strictement positive, et décrémenté à chaque absence de correspondance entre les données d'épreuve EPR et les données secrètes de contrôle CTRL, la mise en oeuvre de l'étape de comparaison étant interdite si la valeur du compteur est nulle.

Ce cas est particulièrement adapté dans le cadre d'une authentification par comparaison entre une clé secrète PIN et une donnée d'identification AUTH.

Dans ce cas, pour augmenter la protection conférée à la clé secrète de contrôle, on prévoit de préférence au moins N données secrètes additionnelles ADD₁, ..., ADD_{N}. Ainsi, si le leurre lié au programme exécuté en cas de correspondance entre les données d'authentification et les données secrètes additionnelles fonctionne, l'attaquant peut itérer des tentatives d'authentifications autant de fois qu'il y a de données secrètes additionnelles, les échecs successifs entraînant la décrémentation du compteur jusqu'à son annulation.

Par ailleurs, ce leurre est d'autant plus efficace si, en outre, le programme mis en oeuvre en cas de correspondance entre les données secrètes de contrôle PIN et les données d'authentification AUTH engendre des variations sur les signaux électriques semblables à celles des signaux électriques générés par le programme mis en oeuvre en cas d'absence de correspondance entre les données d'authentification AUTH et l'une quelconque des clés secrètes CTRL, ADD₁, ..., ADD_{N}.

A l'inverse, les variations de signaux électriques en cas de correspondance entre les données secrètes de contrôle CTRL et les données d'épreuve EPR peuvent être semblables aux variations sur les signaux électriques en cas de correspondance entre les données d'épreuve EPR et les données secrètes additionnelles ADD₁, ..., ADD_{N}.

Dans le premier cas, les données secrètes de contrôle CTRL sont confondues avec les données additionnelles ne permettant pas l'authentification ou le succès de la comparaison. Dans le second cas, les données secrètes de contrôle CTRL sont confondues avec les clés secrètes additionnelles, i.e. elles ne peuvent pas être identifiées parmi ces clés. Dans ce dernier cas, il est préférable de prévoir un nombre très supérieur à N, par exemple de l'ordre de 10 à 100 fois N, de données secrètes additionnelles.

Ces modes de mise en oeuvre du procédé ne sont toutefois pas limités à un composant électronique comprenant un compteur associé à l'étape de comparaison.

Enfin, pour rendre plus difficile encore l'identification des données secrètes de contrôle CTRL, les programmes exécutés pendant ou après l'étape 1100 de comparaison peuvent comprendre des étapes d'attente pendant des délais aléatoires.

Ainsi, même si les programmes exécutés en cas de correspondance ou non entre les données secrètes de contrôle CTRL et les données d'épreuve EPR ne sont pas identiques, la spécificité du programme d'authentification 1110 peut être masquée par ces délais aléatoires.

On a donc développé un procédé d'authentification de mise en oeuvre aisée, plus sécurisé que les procédés précédemment développé, et moins coûteux en temps de calcul que l'art antérieur.

## Revendications

1. Procédé de traitement comparatif sécurisé du type dans lequel un processeur (11) d'un composant électronique (1) compare des données d'épreuve (EPR, AUTH) qu'il reçoit en entrée à des données secrètes principales (CTRL, PIN) stockées dans ledit composant électronique (1), **caractérisé en ce que** le processeur (11) met en oeuvre, en parallèle de la comparaison aux données secrètes (CTRL, PIN), des opérations complémentaires sur les données d'épreuve (EPR, AUTH) qui génèrent sur le composant électronique (1) une variation de comportement qui est fonction des données d'épreuve (EPR, AUTH) qu'il reçoit en entrée et qui s'ajoute à la variation de comportement liée à la comparaison aux données secrètes principales (CTRL, PIN).

2. Procédé selon la revendication 1, dans lequel le composant électronique mémorise des données secrètes additionnelles (ADD₁, ..., ADD_{N}), les opérations complémentaires mises en oeuvre par le processeur (11) comportant au moins une comparaison des données d'épreuve (EPR, AUTH) fournies en entrée du composant électronique (1) à des données secrètes additionnelles (ADD₁, ..., ADD_{N}).

3. Procédé selon l'une des revendications 1 ou 2, dans lequel des opérations complémentaires comportent la mise en oeuvre d'au moins un temps d'attente fonction des données d'épreuve (EPR, AUTH) en entrée du composant électronique (1).

4. Procédé selon les revendications 2 et 3, dans lequel au moins une opération complémentaire de temps d'attente est mise en oeuvre à la suite d'une opération de comparaison, en cas de correspondance entre des données d'épreuve fournies en entrée du composant électronique et des données secrètes principales (CTRL, PIN) ou additionnelles (ADD₁, ..., ADD_{N}).

5. Procédé d'authentification dans lequel on met en oeuvre un procédé de traitement comparatif selon l'une des revendications précédentes, les données d'entrée (EPR) comparées aux données secrètes de contrôle (PIN) ou additionnelles (ADD₁, ..., ADD_{N}) étant des codes (AUTH) à authentifier.

6. Procédé d'authentification selon la revendication 5 prise en combinaison avec la revendication 2, le procédé étant du type dans lequel un compteur est associé à l'étape de comparaison, le compteur étant initialisé à une valeur N strictement positive, et décrémenté à chaque absence de correspondance entre les codes à authentifier (AUTH) et le code constituant les données secrètes de contrôle (PIN), la mise en oeuvre de l'étape de comparaison étant interdite si la valeur du compteur est nulle, les codes constituant les données secrètes additionnelles (ADD₁, ..., ADD_{N}) étant au moins au nombre de N.

7. Procédé d'authentification selon la revendication 6, dans lequel le nombre de codes constituant des données secrètes additionnelles (ADD₁, ..., ADD_{N}) est strictement supérieur à N.

8. Composant (1) électronique d'authentification comprenant une mémoire (12) dans laquelle sont stockées des données secrètes de contrôle (CTRL, PIN) principales et des données de contrôle additionnelles (ADD₁, ..., ADD_{N}), et un processeur (11), le composant électronique étant **caractérisé en ce que** le processeur (11) est programmé pour mettre en oeuvre le procédé selon l'une des revendications précédentes.

## Patentansprüche

1. Verfahren zur sicheren Vergleichsbearbeitung der Art, bei der ein Prozessor (11) eines elektronischen Bauteils (1) Prüfdaten (EPR, AUTH), die er am Eingang empfängt, mit geheimen Stammdaten (CTRL, PIN) vergleicht, die in dem elektronischen Bauteil (1) abgelegt sind, **dadurch gekennzeichnet, dass** der Prozessor (11) parallel zum Vergleich mit den geheimen Daten (CTRL, PIN) ergänzende Operationen an den Prüfdaten (EPR, AUTH) anwendet, die in dem elektronischen Bauteil (1) eine Verhaltensänderung erzeugen, die von den Prüfdaten (EPR, AUTH) abhängt, die er am Eingang empfängt, und die zur Verhaltensänderung hinzugefügt wird, die mit dem Vergleich mit den geheimen Stammdaten (CTRL, PIN) zusammenhängt.

2. Verfahren nach Anspruch 1, wobei das elektronische Bauteil zusätzliche geheime Daten (ADD₁, ..., ADD_{N}) speichert, wobei die ergänzenden Operationen, die von dem Prozessor (11) angewendet werden, mindestens einen Vergleich der Prüfdaten (EPR, AUTH), die am Eingang des elektronischen Bauteils (1) bereitgestellt werden, mit den zusätzlichen geheimen Daten (ADD₁, ..., ADD_{N}) aufweisen.

3. Verfahren nach einem der Ansprüche 1 oder 2, wobei ergänzende Operationen das Anwenden mindestens einer Wartezeit in Abhängigkeit von den Prüfdaten (EPR, AUTH) am Eingang des elektronischen Bauteils (1) aufweisen.

4. Verfahren nach den Ansprüchen 2 und 3, wobei mindestens eine ergänzende Operation einer Wartezeit im Anschluss an eine Vergleichsoperation im Falle einer Übereinstimmung zwischen den bereitgestellten Prüfdaten am Eingang des elektronischen Bauteils und den geheimen Stammdaten (CTRL, PIN) oder zusätzlichen Daten (ADD₁, ..., ADD_{N}) angewendet wird.

5. Authentifikationsverfahren, bei dem man ein Verfahren zur Vergleichsbearbeitung nach einem der vorstehenden Ansprüche anwendet, wobei die Eingangsdaten (EPR), die mit den geheimen Kontrollaten (PIN) oder zusätzlichen Daten (ADD₁, ..., ADD_{N}) verglichen werden, zu authentifizierende Codes (AUTH) sind.

6. Authentifikationsverfahren nach Anspruch 5, in Verbindung mit Anspruch 2, wobei das Verfahren der Art ist, bei der dem Vegleichsschritt ein Zähler zugeordnet wird, wobei der Zähler auf einen streng positiven Wert N initialisiert wird, und bei jeder nicht vorhandenen Übereinstimmung zwischen den zu authentifizierenden Codes (AUTH) und dem Code, der die geheimen Kontrolldaten (PIN) bildet, dekrementiert wird, wobei die Anwendung des Vergleichsschritts verboten ist, wenn der Wert des Zählers Null ist, wobei die Codes, die die zusätzlichen geheimen Daten (ADD₁, ..., ADD_{N}) bilden, mindestens in der Anzahl N vorhanden sind.

7. Authentifikationsverfahren nach Anspruch 6, wobei die Anzahl der Codes, die die zusätzlichen geheimen Daten (ADD₁, ..., ADD_{N}) bilden, absolut größer als N ist.

8. Elektronisches Bauteil (1) zur Authentifikation, umfassend einen Speicher (12), in dem geheime Kontrollstammdaten (CTRL, PIN) und zusätzliche Kontrolldaten (ADD₁, ..., ADD_{N}) abgelegt sind, und einen Prozessor (11), wobei das elektronische Bauteil **dadurch gekennzeichnet ist, dass** der Prozessor (11) programmiert ist, um das Verfahren nach einem der vorstehenden Ansprüche anzuwenden.

## Claims

1. A secure comparative treatment method of the type in which a processor (11) of an electronic component (1) compares test data (EPR, AUTH) it receives as input to main secret data (CTRL, PIN) stored in said electronic component (1), **characterized in that** at the same time as comparison with the secret data (CTRL, PIN) the processor (11) runs complementary operations on the test data (EPR, AUTH) which generate on the electronic component (1) a variation in performance which is a function of the test data (EPR, AUTH) it receives as input and which are added to the variation in performance linked to comparison with the main secret data (CTRL, PIN).

2. The method according to claim 1, in which the electronic component stores additional secret data (ADD₁, ..., ADD_{N}), with complementary operations run by the processor (11) comprising at least one comparison of test data (EPR, AUTH) provided as input of the electronic component (1) to additional secret data (ADD₁, ..., ADD_{N}) .

3. The method according to claim 1 or 2, in which complementary operations comprise performing at least one wait time function of test data (EPR, AUTH) as input of the electronic component (1).

4. The method according to claims 2 and 3, in which at least one complementary wait time operation is performed following a comparison operation, in case of correspondence between test data provided as input of the electronic component and main (CTRL, PIN) or additional (ADD₁, ..., ADD_{N}) secret data.

5. An authentication method in which a comparative treatment method is performed according to one of the preceding claims, the input data (EPR) compared to the secret control data (PIN) or additional data (ADD₁, ..., ADD_{N}) being codes (AUTH) to be authenticated.

6. The authentication method according to claim 5 taken in combination with claim 2, the method being of the type in which a counter is associated to the comparison step, the counter being initialised at a strictly positive value N, and decremented at each lack of correspondence between the codes to be authenticated (AUTH) and the code constituting the secret control data (PIN), with execution of the comparison step being prohibited if the value of the counter is zero, the codes constituting the additional secret data (ADD₁, ..., ADD_{N}) being at least as many as N.

7. The authentication method according to claim 6, in which the number of codes constituting additional secret data (ADD₁, ..., ADD_{N}) is strictly greater than N.

8. An electronic authentication component (1) comprising a memory (12) in which main secret control data (CTRL, PIN) and additional control data (ADD₁, ..., ADD_{N}) are stored, and a processor (11), the electronic component being **characterized in that** the processor (11) is programmed to run the method according to one of the preceding claims.
